# EUROPÄISCHE PATENTSCHRIFT

(11) **EP 0 585 403 B1**
(45) Veröffentlichungstag und Bekanntmachung des Hinweises auf die Patenterteilung: **29.11.1995**
(21) Anmeldenummer: 92914952.4
(22) Anmeldetag: 09.07.1992
(51) Int. Cl.: A21C 5/04

(54) **MASCHINE ZUM BEHANDELN VON TEIG**
MACHINE FOR TREATING DOUGH
MACHINE DE TRAITEMENT DE PATE

(30) Priorität: 12.07.1991 AT 1412/91
(43) Veröffentlichungstag der Anmeldung: 09.03.1994
(73) Patentinhaber: König, Elisabeth, A-8045 Graz (AT)
(72) Erfinder: KÖNIG, Helmut Gottfried, verstorben (AT)
(74) Vertreter: Wildhack, Helmut, Dipl.-Ing. Dr.
(86) Internationale Anmeldenummer: AT9200089
(87) Internationale Veröffentlichungsnummer: WO9300818

(56) Entgegenhaltungen:
- DE-A- 2 943 088
- DE-C- 483 268
- US-A- 2 178 406
- US-A- 2 270 512
- US-A- 4 684 040

## Beschreibung

Die Erfindung bezieht sich auf eine Maschine zum Behandeln, insbesondere Portionieren und bzw. oder Wirken, von Teig, mit einer um eine horizontale Achse schrittweise drehbaren Trommel, die an ihrem Umfang mit Aufnahmeöffnungen für Teigportionen versehen ist, mit zumindest einem Behandlungsorgan für den Teig, mit einem Kolben in jeder Aufnahmeöffnung, der in radialer Richtung der Trommel in der Aufnahmeöffnung geführt ist, und mit einer gekrümmten Zwangsführung für die Kolben zur radialen Ein- und Auswärtsbewegung derselben während zumindest einer Phase der Behandlung, welche Zwangsführung die Kolben nach innen und nach außen, bezogen auf den Radius der Trommel, führt und relativ zur Trommel zumindest in den Stillstandsphasen der Trommelbewegung automatisch verstellbar ist.

Derartige Maschinen sind bekannt (z.B. AT-PS 341 970). Sie haben zumeist vier Reihen von Aufnahmeöffnungen, die in gleichen Abständen um den Trommelumfang verteilt angeordnet sind, also jeweils um 90° versetzt. Der schrittweise Trommelvorschub bewirkt pro Schritt eine Verdrehung der Trommel um 90°, so daß die Aufnahmeöffnungen von Station zu Station weiterbefördert werden, wo die Behandlung des Teiges, z.B. eine Portionierung oder eine Wirkung, erfolgt. Bei der zuvor erwähnten bekannten Maschine ist an der einen Trommelseite eine Portionierstation angeordnet, an der der Teig in die Aufnahmeöffnungen mittels eines Schiebers eingedrückt und bei der Weiterbewegung der Trommel mittels einer Abscherkante portioniert wird. Im Bereich des Trommelscheitels ist eine Wirkstation vorgesehen, an der ein Wirkorgan angeordnet ist und die in den Aufnahmeöffnungen befindlichen Teigstücke in eine ballige Form überführt. An der anderen Trommelseite liegt eine Abgabestation, an der die Teigstücke aus den Aufnahmeöffnungen durch Auswärtsbewegung der Kolben ausgestoßen werden. Diese Auswärtsbewegung der Kolben wird durch die Zwangsführung der Kolben erzielt, welche während des Trommelstillstandes relativ zur Trommel verdreht wird, wobei die Krümmung dieser Zwangsführung die gewünschte Auswärtsbewegung der Kolben an der Ablagestation bewirkt. Zugleich werden die Kolben bei dieser Relativverdrehung der Zwangsführung an der Portionierstation zurückgezogen, um den in die Aufnahmeöffnung einzudrückenden Teig anzusaugen. An der Wirkstation erfolgt ebenfalls während des Wirkvorganges eine Zurückziehung der Kolben, um dem beim Wirkvorgang sich allmählich vergrößernden Platzbedarf des Teigstückes Rechnung zu tragen. Die bekannte Maschine arbeitet problemlos, solange die Ausmaße, um welche die Kolben an den einzelnen Stationen vor- bzw. zurückbewegt werden, nicht zu stark geändert werden. Eine solche Änderung ist aber z.B. an der Portionierstation dann erforderlich, wenn das dort auszuwiegende Teigstück hinsichtlich seines Volumens bzw. Gewichtes geändert werden soll, also z.B. von der Herstellung kleinerer Teigportionen auf die Herstellung größerer Teigportionen oder umgekehrt übergegangen werden soll. Zwar ist es hiezu aus der eingangs beschriebenen Konstruktion bekannt, durch eine Verstelleinrichtung die Zwangsführung relativ zur Trommel zusätzlich zu verstellen, also sozusagen die Ausgangslage der Relativverdrehung zwischen Zwangsführung und Trommel zu ändern. Dadurch läßt sich an der Portionierstelle eine mehr oder weniger große Zurückziehung der Kolben nach Wunsch einstellen. Schwierigkeiten entstehen jedoch hiebei dann, wenn diese Verstellung in verhältnismäßig großem Maße erfolgen soll, da dann eine erhebliche Änderung der erwähnten Ausgangslage der Zwangsführung erforderlich ist. Diese Änderung wirkt auf die Verhältnisse an der Wirkstelle und an der Abgabestelle zurück, so daß dort nicht mehr optimale Positionen der Kolben beim Wirkvorgang vorliegen bzw. die Teigstücke nicht mehr verläßlich aus den Aufnahmeöffnungen ausgestoßen werden.

Die Erfindung setzt sich zur Aufgabe, eine Maschine der eingangs geschilderten Art so zu verbessern, daß die Verhältnisse an einer Station in weitem Maße beliebig geändert werden können, ohne daß dies auf die anderen Stationen von Einfluß ist. Die Erfindung löst diese Aufgabe durch die Merkmale des kennzeichnenden Teils von Anspruch 1. Auf diese Weise wird mit einfachem konstruktiven Aufwand das zuvor geschilderte Problem gelöst. Die an den einzelnen Bauteilen angeordneten Zwangsführungsteile führen weiterhin die Kolben stets so, daß diese Kolben weder nach innen noch nach außen pendeln können, also stets exakt geführt sind. Dennoch läßt sich durch die Verstellung der einzelnen Bauteile relativ zueinander erreichen, daß an einzelnen Stationen Änderungen der Zwangsführung möglich sind, ohne daß die Zwangsführung, welche für die anderen Stationen wirksam ist, ebenfalls geändert wird. Dadurch sind weite Variationen möglich, die Bearbeitungsverhältnisse an den einzelnen Stationen nach Wunsch einzustellen, z.B. kann an der Portionierstelle das Gewicht bzw. das Volumen der auszuwiegenden Teigstücke in weitem Maße geändert werden, ohne daß diese Änderung auf den Wirkvorgang oder auf den Ablagevorgang der Teigstücke rückwirkt.

In der Regel reichen zwei relativ zueinander hinsichtlich ihrer Lage veränderliche Bauteile aus, es können jedoch auch mehr als zwei solche Bauteile vorgesehen sein, z.B. kann jeder der drei erwähnten Stationen ein solcher Bauteil zugeordnet sein. Stets wird jedoch - wenn Protionieren, Wirken und Ablegen der Teigstücke an einer einzigen Trommel erfolgen soll - das Prinzip beibehalten, daß an der Portionierstelle ein Zurückziehen der Kolben erfolgt, ebenso an der Wirkstelle, wogegen an der Ablagestelle eine Auswärtsbewegung der Kolben geschieht. Ebenso bleibt stets das allgemeine Wirkungsprinzip gewahrt, daß zur Erzielung dieser Kolbenbewegungen zumindest Teile der Zwangsführung während des Trommelstillstandes bewegt werden.

Im Rahmen der Erfindung bestehen mehrere Möglichkeiten, die Relativverstellung der einzelnen, die Zwangsführung ergebenden Bauteile durchzuführen: Gemäß einer besonders günstigen Ausführungsform der Erfindung kann die Anordnung so getroffen sein, daß zumindest zwei die Kurvenbahnen tragenden Bauteile um ein gemeinsames Zentrum relativ zueinander einstellbar verdrehbar sind. Dies ergibt eine übersichtliche Konstruktion, bei einfacher Antriebsmöglichkeit. Es kann jedoch im Rahmen der Erfindung die Anordnung auch so getroffen sein, daß zumindest zwei die Kurvenbahn tragenden Bauteile einseitig voneinander einstellbar spreizbar sind, also etwa so wie die einzelnen Sektoren eines Fächers. Das Ausmaß der Verdrehung der konzentrisch ineinander gelagerten Wellen bzw. Hohlwellen sowie die Winkelgeschwindigkeit lassen sich wählen, was Anpassungen an variierende Anforderungen ermöglicht. So kann im Rahmen der Erfindung die Anordnung so getroffen sein, daß die Verstelltriebe eine vom Antrieb verdrehte Nocke aufweisen, an deren Umfang ein Schwenkhebel anliegt, der mit der Welle eines der Bauteile verbunden ist. Die Form dieser Nocke bestimmt in einem solchen Fall Ausmaß und Winkelgeschwindigkeit der Verdrehung des betreffenden Bauteiles. Dies ermöglicht es, durch Austausch der Nocke gegen eine anders geformte Nocke nochmals Änderungen der bei den einzelnen Bearbeitungsvorgängen auftretenden Kolbenbewegungen hervorzurufen. Zusätzlich hiezu kann im Rahmen der Erfindung die Anordnung so getroffen sein, daß der Antrieb eine weitere Kurvenbahn aufweist, von der sowohl die schrittweise Vorschubbewegung der Trommel, als auch eine Verstellung zu - mindest einer Kurvenbahn der Zwangsführung abgeleitet sind, wobei die Zeitdauer jedes Bewegungsschrittes der Trommel kürzer ist als die dazwischenliegenden Pausen. Dies schafft in den Pausen der Trommelbewegung mehr Zeit für die Bearbeitungsvorgänge, was insbesondere für den Wirkvorgang von wesentlichem Vorteil ist, da die Qualität des gewirkten Teigstückes stark abhängig ist von der Zeitdauer, die für den Wirkprozeß zur Verfügung steht. Dadurch wird es auch erleichtert, sich an variierende Verhältnisse anzupassen.

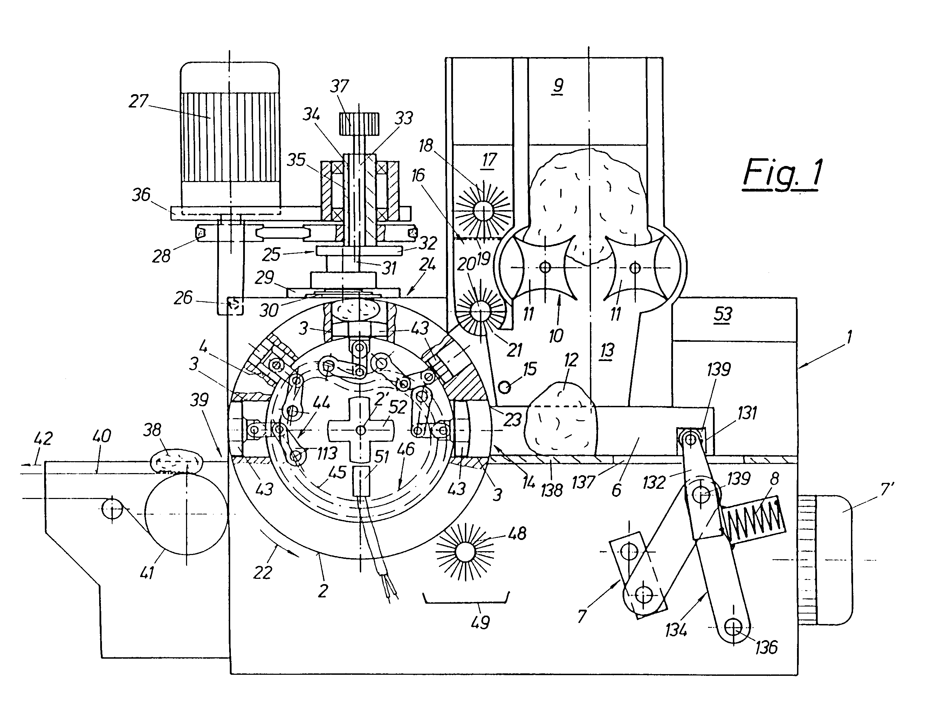

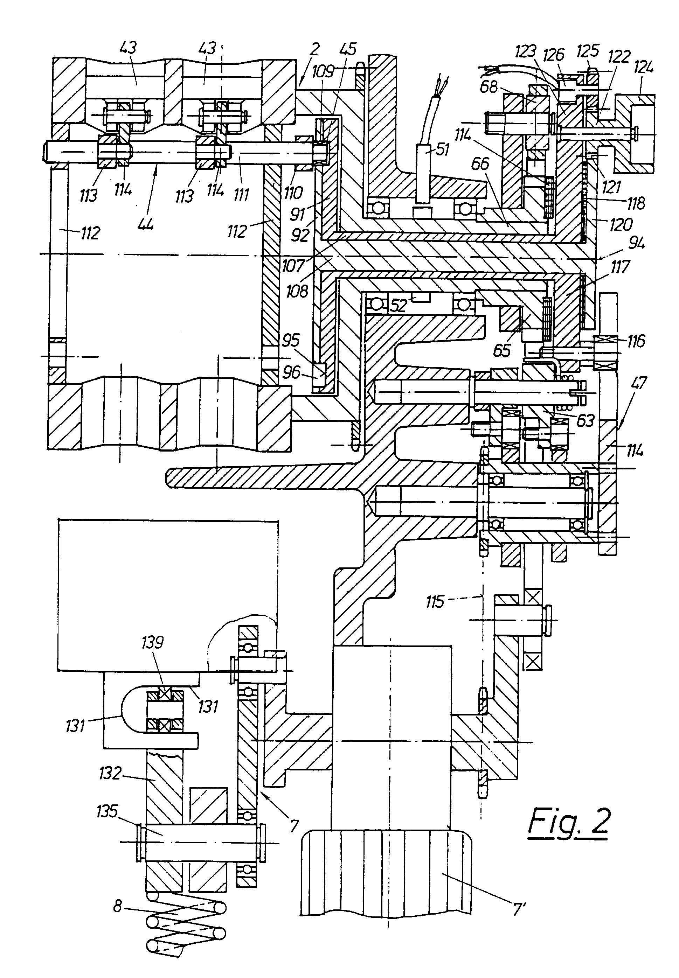

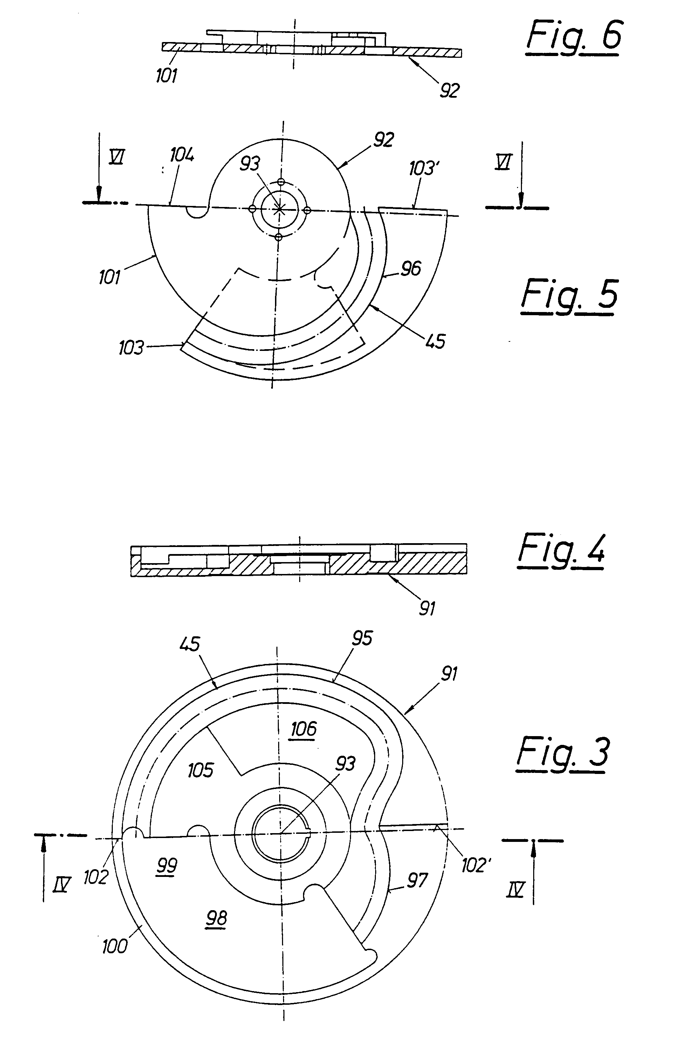

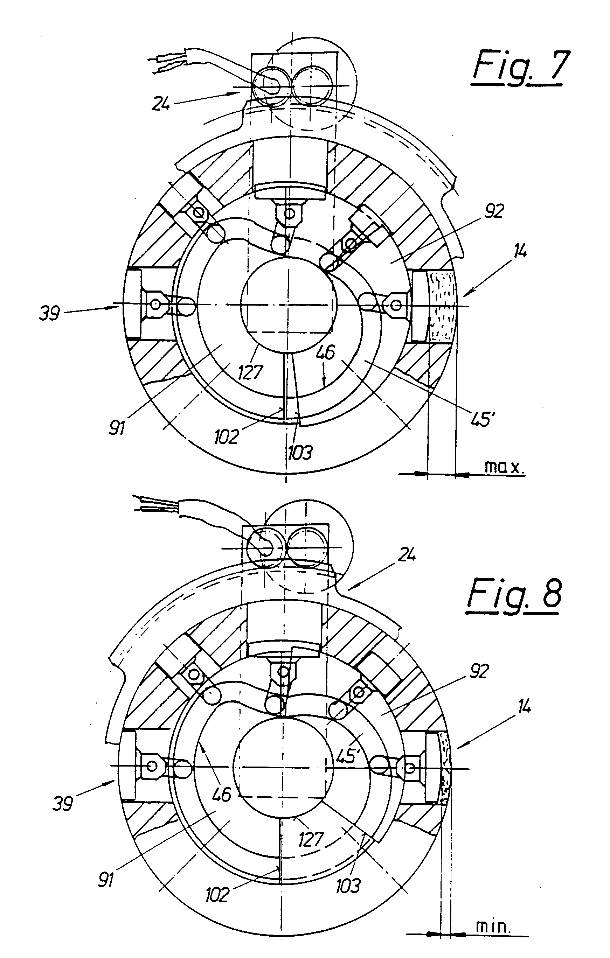

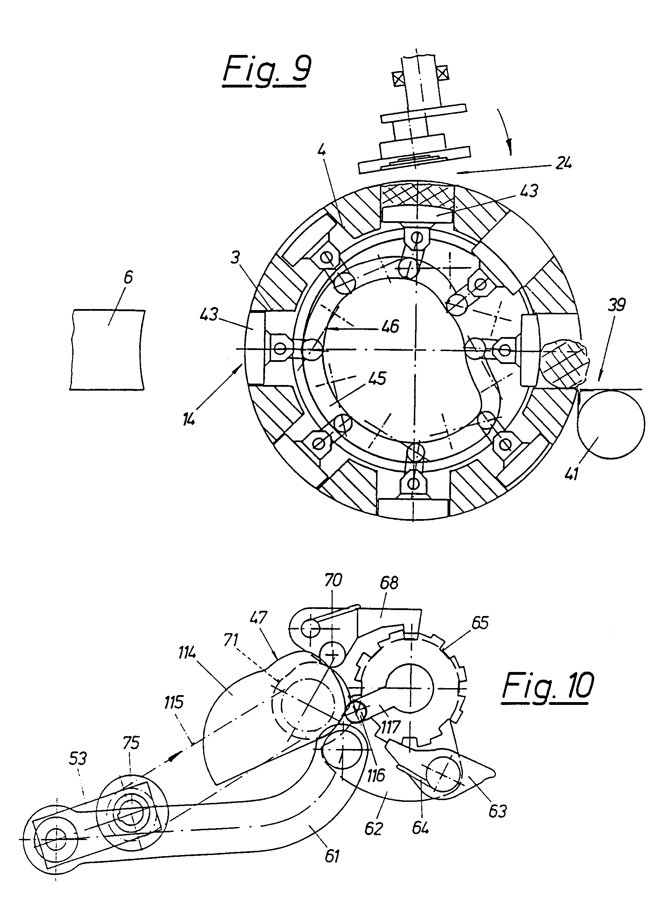

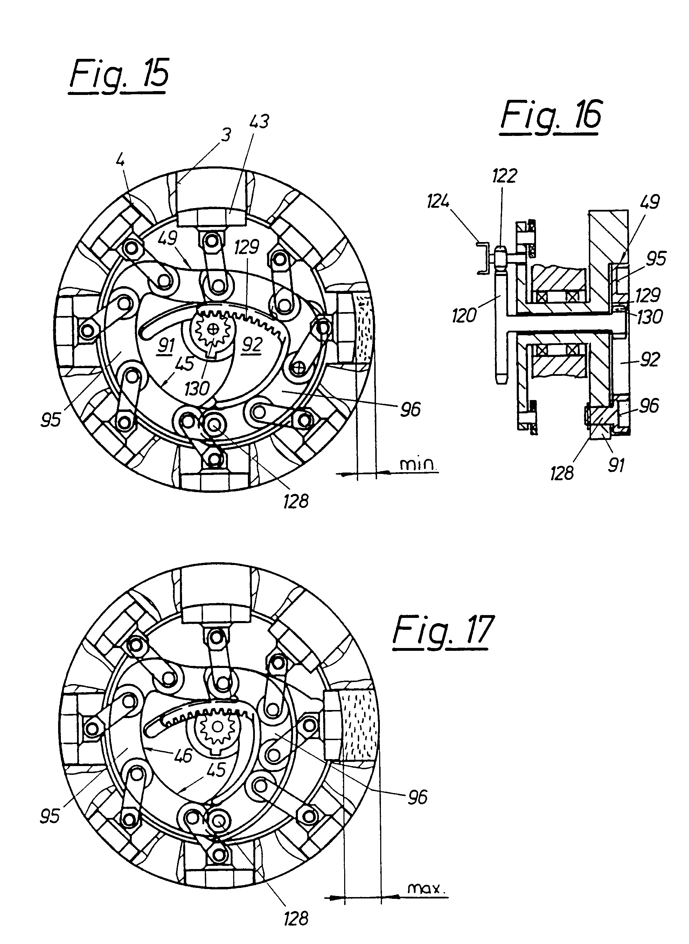

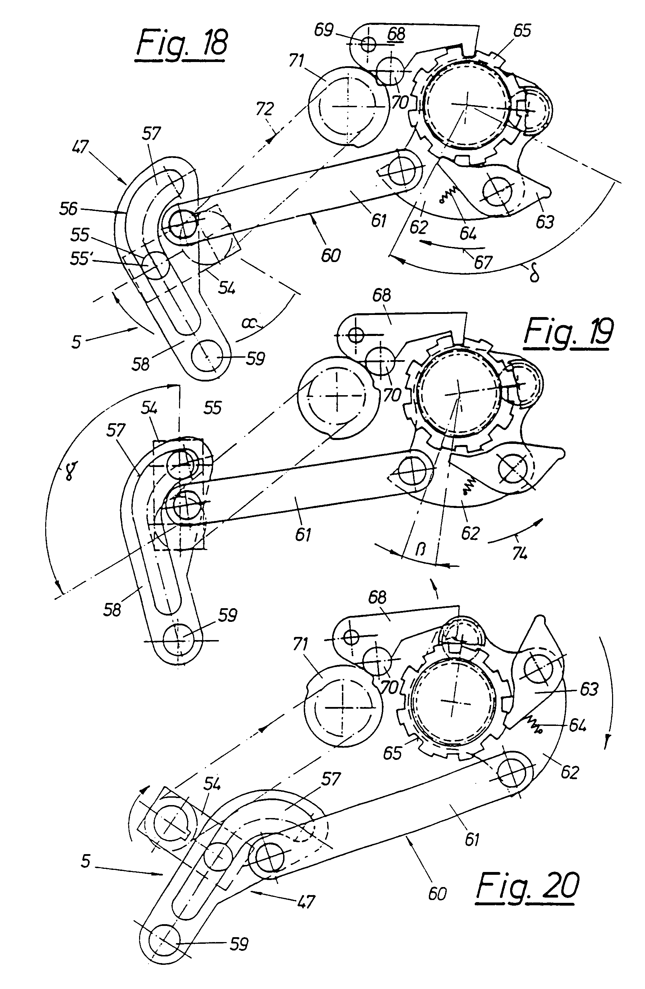

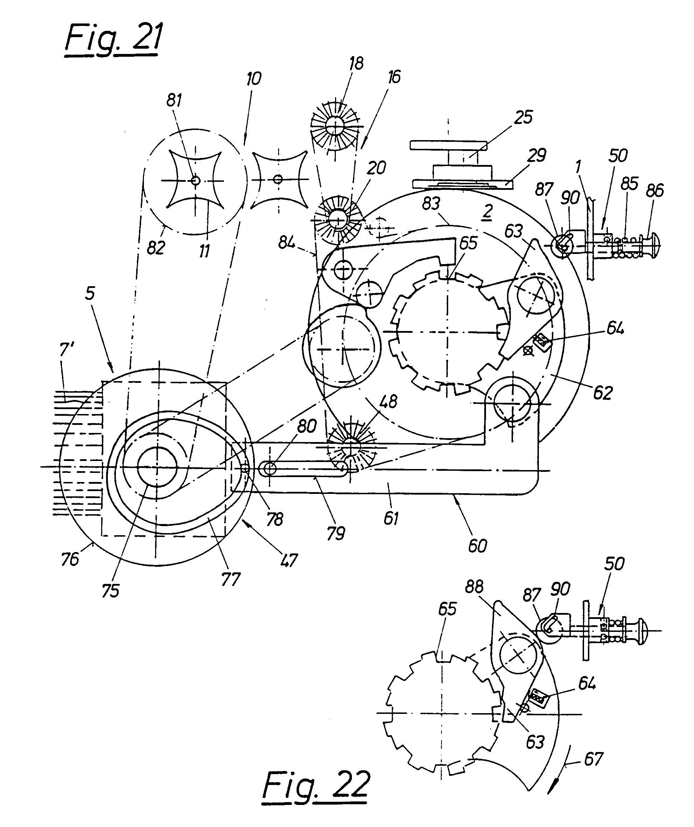

Weitere Kennzeichen und Vorteile der vorliegenden Erfindung ergeben sich aus der Beschreibung von Ausführungsbeispielen des Erfindungsgegenstandes, welche in den Zeichnungen schematisch dargestellt sind. Fig.1 zeigt einen Vertikalschnitt durch die Vorrichtung. Fig.2 ist ein normal zur Schnittebene der Fig.1 liegender Vertikalschnitt durch die Trommelachse, in größerem Maßstab. Die Fig.3 und 5 zeigen die beiden Bauteile einer zweiteiligen Zwangsführung, jeweils in Axialansicht. Die Fig.4 und 6 sind Schnitte nach den Linien IV-IV bzw. VI-VI der Fig.3 bzw. 5. Die Fig.7 und 8 zeigen eine aus zwei Bauteilen nach den Fig.3 bis 6 zusammengesetzte Zwangsführung in zwei verschiedenen Einstellungen. Die Fig.9,11 und 13 zeigen die Zwangsführung in drei aufeinanderfolgenden Phasen des Wirkvorganges und die Fig.10,12 und 14 zeigen den zugehörigen Antrieb in den drei entsprechenden Betriebszeitpunkten. Die Fig.15 und 17 zeigen eine Ausführungsvariante für eine zweiteilige Zwangsführung. Fig.16 zeigt ein Detail der Fig.15 im Schnitt. Die Fig.18 bis 20 zeigen Ausführungsvarianten zu den Fig.10,12 und 14. Fig.21 zeigt eine abgewandelte Ausführungsform in ihren wesentlichen Bauteilen in Ansicht und Fig.22 zeigt ein Detail der Fig.21 in einer anderen Betriebsstellung.

Bei der Ausführungsform nach Fig.1 ist in einem Gestell 1 eine Trommel 2 um eine horizontale Achse 2' drehbar gelagert. Die Trommel 2 ist an ihrem Umfang mit unterschiedlich großen Aufnahmeöffnungen 3 bzw.4 für den zu wirkenden Teig versehen, wobei die größeren Aufnahmeöffnungen 3 alternierend mit den kleineren Aufnahmeöffnungen 4 über den Umfang der Trommel 2 verteilt in gleichmäßigen Abständen angeordnet sind. Zweckmäßig sind diese Aufnahmeöffnungen in Reihen angeordnet, welche parallel zur Trommelachse 2' verlaufen. Die Trommel wird durch einen Antrieb 5 (Fig.2,18 bis 20) so schrittweise bewegt, daß jeweils eine Aufnahmeöffnung 3 bzw.4 bei jedem Schritt der Trommelbewegung zu einer Portionierstelle 14 gelangt, an welcher der Teig mittels eines von einem Schieber 6 gebildeten Eindrückwerkzeuges in die jeweilige Aufnahmeöffnung eingedrückt wird. Der Schieber 6 ist im Gestell 1 verschiebbar gelagert und wird durch einen vom Hauptmotor 7' angetriebenen Kurbelantrieb 7 hin- und herbewegt. In den Kurbelantrieb 7 ist eine Zugfeder 8 eingeschaltet, welche verhindert, daß der Teig bei der Vorwärtsbewegung des Schiebers 6 zu stark gequetscht wird. Der zu portionierende Teig wird in einen Einfüllschacht 9 eingefüllt und mittels einer Vorportioniereinrichtung 10 vorportioniert, welche aus zwei auf gleicher Höhe im Einfüllschacht 9 angeordneten, um horizontale Achsen im Gegensinn umlaufenden Sternwalzen 11 besteht, die intermittierend in Abhängigkeit vom Teigvolumen 12 angetrieben sind, welches sich in einer unterhalb der Sternwalzen 11 angeordneten Kammer 13 befindet, aus welcher der Teig 12 durch den Schieber 6 eingedrückt und dabei in der Kammer 13 verdrängt wird. Steht genügend Teig in der Kammer 13 zur Verfügung, so wird bei dieser Teigverdrängung ein Fühler 15 betätigt, welcher einen Impuls an eine Steuerung für den Antrieb der Sternwalzen 11 abgibt. Dieser Fühler kann z.B. eine Lichtschranke sein oder ein auf die Annäherung feuchter Masse ansprechender Näherungsfühler, z.B. ein kapazitiver Fühler, oder eine in der Kammer 13 oberhalb der Bewegungsbahn des Schiebers 6 schwenkbar gelagerte Stange, die durch den verdrängten Teig hochgehoben wird. Fallen die vom Fühler 15 abgegebenen Impulse - gegebenenfalls für eine einstellbare Anzahl von Hüben des Schiebers 6 - aus, so bewirkt die Steuerung, daß mittels der Sternwalzen 11 Teig in die Kammer 13 entweder für eine bestimmte Zeit nachgefördert wird, oder so lange, bis der Fühler 15 wieder anspricht.

Das in der Kammer 13 befindliche Teigvolumen 12 wird von einer Bemehlungsvorrichtung 16 an der Eindrückseite bemehlt. Hiezu läuft in einer Mehlkammer 17 eine Dosierbürste 18 um, welche durch ein Dosiergitter 19 mit verstellbaren Gitteröffnungen Mehl auf eine Verteilerbürste 20 wirft, welche das Mehl durch eine Öffnung 21 in die Kammer 13 schleudert. Der Antrieb dieser Bemehlungsvorrichtung 16, insbesondere ihrer Dosierbürste 18, kann in gleicher Weise vom Fühler 15 gesteuert sein wie der Antrieb der Vorportioniereinrichtung 10.

Der in die jeweilige Aufnahmeöffnung 3 bzw.4 eingedrückte Teig wird bei der Weiterbewegung der Trommel 2 in Richtung des Pfeiles 22 durch eine Abscherkante 23 abgeschert, wodurch die eigentliche Portionierung erfolgt. Das in der Aufnahmeöffnung befindliche Teigstück gelangt dann nach einer Drehung der Trommel 2 um 90° zu einer Wirkstelle 24, die sich im Bereiche des oberen Trommelscheitels befindet. Dort ist am Gestell 1 eine Wirkvorrichtung 25 vorgesehen, die von einem Motor 27 über einen Keilriementrieb 28 angetrieben wird und ein Wirkwerkzeug 29 in Form einer Platte hat, die beim Wirkvorgang eine kreisende Bewegung relativ zu der ihr benachbarten Aufnahmeöffnung vollführt und an ihrer der Trommel 2 zugewendeten Seite mit stufenförmig abgesetzten Vertiefungen 30 versehen ist. Das Wirkwerkzeug 29 ist drehbar an einem Exzenterzapfen 31 gelagert, der an einer Scheibe 32 befestigt ist, die am unteren Ende eines zweiten Exzenterzapfens 33 sitzt. Dieser weitere Exzenterzapfen 33 ist in eine Aufnahme 34 verdrehbar eingesetzt, die von einer exzentrischen Bohrung einer Antriebswelle 35 gebildet ist, die vom Keilriementrieb 28 angetrieben ist und in einer Halterung 36 gelagert ist, die auch den Motor 27 trägt und um eine Achse 26 am Gestell schwenkbar befestigt ist, so daß die Wirkvorrichtung 25 zwecks Reinigung od.dgl. vom Gestell abschwenkbar ist. Der in der Antriebswelle verdrehbare zweite Exzenterzapfen 33 ist hinsichtlich seiner Drehlage arretierbar und trägt an seinem oberen Ende eine Handhabe 37 zur einstellbaren Verstellung. Dadurch läßt sich der Radius der Kreisbewegung des Wirkwerkzeuges 29 auch bei laufendem Betrieb ändern. Eine Mitdrehung des Wirkwerkzeuges 29 wird durch eine nicht dargestellte Geradführung verhindert.

Die fertig gewirkten Teigstücke 38 werden an einer Ablegestelle 39 aus den Aufnahmeöffnungen 3 bzw.4 ausgestoßen und auf ein Förderband 40 abgelegt, das um eine Umlenkrolle 41 geführt ist, die nahe der Trommel 2 angeordnet ist. Um einen sicheren Übergang des auszustoßenden Teigstückes 38 zu gewährleisten, kann das Förderband 40 mit Vorlauf angetrieben sein, d.h. es setzt sich in Richtung des Pfeiles 42 in Bewegung, bevor noch das Teigstück ausgestoßen wird. Diese Ausstoßung wird hervorgerunfen durch eine radiale Auswärtsbewegung eines in jeder Aufnahmeöffnung 3,4 geführten Kolbens 43. Alle Kolben 43 sind über ein Gestänge 44 an einer Kurvenbahn 45 einer Zwangsführung 46 derart geführt, daß eine Relativverdrehung dieser Kurvenbahn 45 in Bezug auf die Trommel 2 eine radiale Bewegung des Kolbens 43 in der jeweiligen Aufnahmeöffnung, entweder nach innen oder nach außen, zur Folge hat. Zur Erzielung dieser Relativverdrehung dient ein später näher beschriebener Antrieb 47. Im wesentlichen ist die Kurvenbahn 45 so geformt, daß die während der Bewegungspausen der schrittweisen Trommelbewegung erfolgende Relativverdrehung der Kurvenbahn 45 an der Portionierstelle 14 ein Zurückziehen der Kolben 43 bewirkt, zwecks Ausübung eines Ansaugeffektes auf den zu portionierenden Teig. An der Wirkstelle 24 erfolgt eine weitere Zurückziehung des Kolbens 43, um dem durch den Wirkvorgang allmählich in eine ballige Form übergeführten Teigstück mehr Platz zu geben. An der Ablegestelle 39 werden die Kolben 43 hingegen bis zum Trommelumfang nach außen geschoben und dadurch die Teigstücke 38 aus den Aufnahmeöffnungen 3 bzw.4 ausgeworfen.

An der Trommel gegebenenfalls anhaftende Teigreste werden durch eine Reinigungsbürste 48 abgestreift und auf eine Auffangtasse 49 geworfen.

Es ist jeweils nur eine Größe der Aufnahmeöffnungen 3 bzw.4 wirksam. Um von den großen Aufnahmeöffnungen 3 auf die kleinen Aufnahmeöffnungen 4 oder umgekehrt übergehen zu können, ist eine Umschalteeinrichtung 50 (Fig.21,22) vorgesehen, deren Funktion später näher erläutert wird. Die jeweils eingestellte Öffnungsgröße kann mittels eines Fühlers 51 (Fig.1) abgefühlt werden, der mit einem den größeren Aufnahmeöffnungen 3 zugeordneten, auf der Trommelwelle befestigten Geberkreuz 52 zusammenwirkt. Fühlt der Fühler 51 in der Bewegungspause der Trommel 2 einen ihm benachbarten Vorsprung des Geberkreuzes 52, so sind die größeren Aufnahmeöffnungen 3 wirksam, ansonsten die kleineren Aufnahmeöffnungen 4. Die Auswertung der vom Fühler 51 gelieferten Signale kann ebenso wie die Steuerung der Antriebe der Vorportioniereinrichtung 10 und bzw. oder der Bemehlungsvorrichtung 16 durch eine in einem Schaltkasten 53 befindliche Elektronik erfolgen.

Es ist zweckmäßig, die für den Wirkvorgang an der Wirkstelle 24 für jedes Teigstück 38 zur Verfügung stehende Zeit enger zu bemessen als jene Zeit, welche benötigt wird, um einen Vorschubschritt der Trommel 2 zu vollführen, also z.B. eine Aufnahmeöffnung 3 bzw. 4 von der Portionierstelle 14 zur Wirkstelle 24 bzw. von dieser zur Ablagestelle 39 zu führen. Die Fig.18 bis 20 zeigen hiezu geeignete Antriebe 5 für die Trommel bzw. 47 für die Zwangsführung 46. Vom Hauptmotor 7' (Fig.1) wird über ein Getriebe eine Kurbel 54 gedreht, die eine auf einem Zapfen 55 gelagerte drehbare Rolle 55' trägt, die in einem eine Kurvenbahn 56 bildenden gekrümmten Schlitz 57 eines Schwenkhebels 58 geführt ist, der um eine horizontale Achse 58 schwenkbar im Gestell 1 der Vorrichtung gelagert ist und einen Bauteil eines Gestänges 60 bildet, welches für die Bewegung der Trommel 2 bzw. der Zwangsführung 46 dient. Dieses Gestänge 60 hat eine Stange 61, deren eines Ende am Schwenkhebel 58 angelenkt ist und deren anderes Ende mit einem Schwingarm 62 gelenkig verbunden ist, der auf die Welle der Trommel 2 drehbar aufgesetzt und mit der Zwangsführung 46 drehschlüssig verbunden ist, z.B. mittels einer Welle, welche durch hohle Wellenstummel der Trommel 2 hindurchgeführt ist, die an den beiden Seitenschildern der Trommel 2 befestigt sind. Der Schwingarm 62 trägt eine auf ihm schwenkbar gelagerte Klinke 63, die durch eine Feder 64 gegen eine Rastenreihe 65, insbesondere einen Rastenkranz, gedrückt wird, die drehschlüssig mit der Welle 66 der Trommel 2 verbunden ist. Bei der Vorschubbewegung der Trommel 2 wird über den Antrieb 5 der Schwingarm 62 in Richtung des Pfeiles 67 (Fig.3) verschwenkt, wobei die Klinke 63 in eine Rast der Rastenreihe 65 einrastet und dadurch die Trommel 2 mitnimmt. Während der Bewegungspausen der schrittweisen Trommelbewegung rastet eine weitere Klinke 68, welche um eine Achse 69 im Gestell 1 schwenkbar gelagert ist, in eine Rast der Rastenreihe 65 ein und hält dadurch die Trommel 2 gegen Verdrehung fest. Die Klinke 68 trägt eine auf ihr drehbar gelagerte Rolle 70, die entlang des Umfanges einer Nockenscheibe 71 geführt ist, die vom Hauptmotor 7' über einen Kettentrieb 72 verdreht wird. Die Form des Umfanges der Nockenscheibe 71 bestimmt, wann die Klinke 68 aus der Rastenreihe 65 ausgehoben wird und dadurch die Trommel 2 für eine Verdrehung freigibt.

Der Antrieb 47 für die Verdrehung der seitlich der Trommel 2 angeordneten Zwangsführung 46 (Fig.2), welche zur Verstellung der Kolben 43 dient, erfolgt ebenfalls vom Hauptmotor 7' über die Kurbel 54 (Fig.18 bis 20) aus und benützt ebenfalls das Gestänge 60. Hiezu ist eine die Zwangsführung 46 tragende Welle, welche hier der Einfachheit halber als Einfachwelle angenommen sei, drehschlüssig mit dem Schwingarm 62 verbunden. Jede Verschwenkung des Schwingarmes 62, sei es beim Trommelvorschub in Richtung des Pfeiles 22 (Fig.1) oder während der Bewegungspause der Trommelbewegung in der entgegengesetzten Richtung, bewirkt daher eine entsprechende Verschwenkung der Zwangsführung 46 um die Achse dieser Welle.

Die Verhältnisse, insbesondere die Form des gebogenen Schlitzes 57 im Schwenkhebel 58, sind nun so gewählt, daß sich für die Trommelbewegung (Vorschub von Position zu Position) kürzere Zeitspannen ergeben als für die Verdrehung der Zwangsführung 46 während des Stillstandes der Trommel 2. Da die Antriebe 5,47 auf der anderen Seite der Trommel 2 liegen als die Betrachterseite der Fig.1, sind die Lagen der in den Fig.18 bis 20 dargestellten Bauteile seitenverkehrt, so daß die Portionierstelle 14 links und die Ablagestelle 39 rechts liegen. Den Fig.18 bis 20 zugeordnet sind die Fig.9,11 und 13, welche die Relativstellung von Trommel 2 und Zwangsführung 46 sowie die dadurch hervorgerufene Bewegung der Kolben 43 anschaulich zeigen.

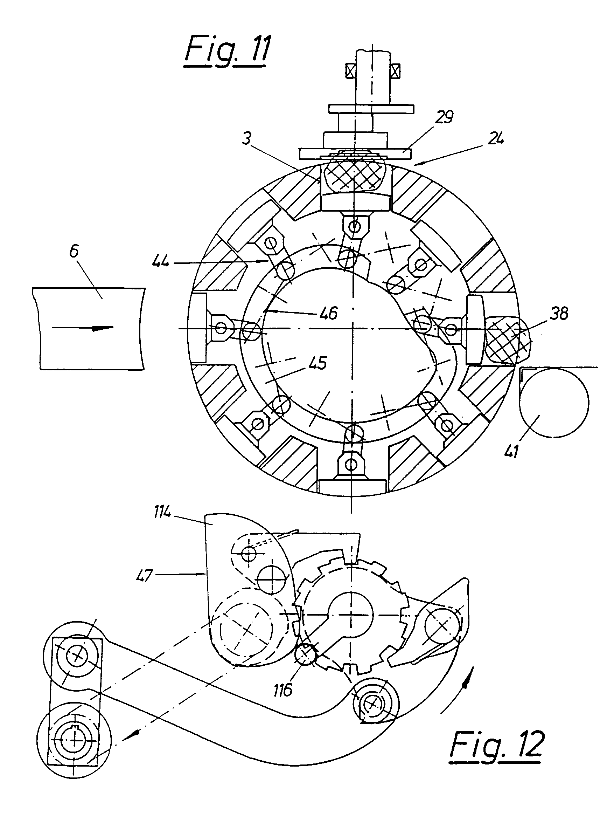

Die Fig.18 und 9 zeigen die Verhältnisse vor Beginn des Wirkvorganges. Es ist ersichtlich, daß während eines Drehwinkels α der Kurbel 54 von etwa 120° der Vorschub der Trommel 2 um 90° erfolgt und zwar harmonisch beschleunigend ohne Stoß, ebenso harmonisch verzögernd. Der an der Wirkstelle 24 (Fig.9) befindliche Kolben 43 befindet sich in einer Mittelstellung, entsprechend dem an der Portionierstelle 14 ausgewogenen Teigvolumen. Sobald der Vorschub der Trommel 2 beendet ist, erlaubt es die Nockenscheibe 71 der Klinke 68, in die Rastenreihe 65 einzurasten, wodurch die Trommel 2 gegen Verdrehung blockiert wird. Es beginnt nun bei der Weiterdrehung der Kurbel 54 der Wirkvorgang (Fig.11,19). Hiebei wird durch Verschiebung der Stange 61 nach rechts (Fig.19) der Schwingarm 62 in Richtung des Pfeiles 74 verschwenkt, jedoch anfänglich nur um ein geringes Maß (Winkel β ), obwohl die Kurbel 54 sich während dieser Zeit um einen erheblich größeren Winkel γ , welcher wieder etwa 120° beträgt, verdreht. Diese relativ geringe Verschwenkung des Schwingarmes 62 hat eine ebenso geringe Verdrehung der Zwangsführung 46 zur Folge, wodurch der an der Wirkstelle 24 befindliche Kolben 43 zu Beginn des Wirkvorganges nur verhältnismäßig wenig in seiner Aufnahmeöffnung 3 zurückgezogen wird. Für diese Anfangsphase des Wirkvorganges steht daher etwa ein Drittel der Gesamtzeit des Zyklus zur Verfügung, oder etwa ebensoviel Zeit wie für den Trommelvorschub (Winkel α , Fig.18).

Die Form des Schlitzes 57 im Schwenkhebel 58 ist abgestimmt auf die Form der Kurvenbahn 45 der Zwangsführung 46, so daß die an der Wirkstelle 24 nötige Rückzugsgeschwindigkeit des Kolbens 43 mit der gewünschten Größe erfolgt.

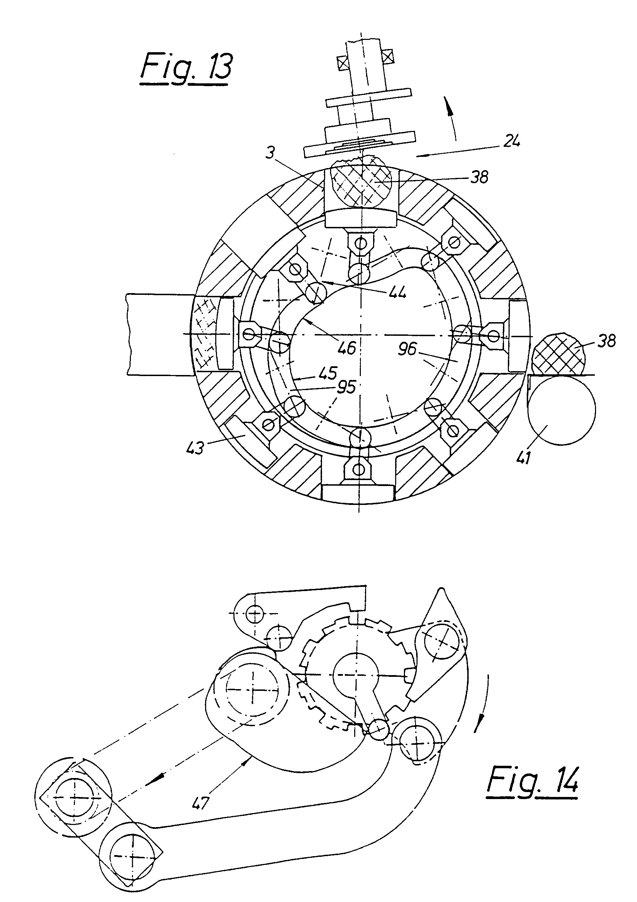

Beim Weiterdrehen der Kurbel 54 (Fig.13,20) erfolgt dann anschließend an den Winkel γ (Fig.19) eine beschleunigte Verschwenkung des Schwingarmes 62 und damit eine raschere Verdrehung der Zwangsführung 46, was eine raschere Zurückziehung des Kolbens 43 in seiner Aufnahmeöffnung 3 bzw.4 in der Endphase des Wirkvorganges zur Folge hat. Die Fig.13 und 20 zeigen die Verhältnisse nach Beendigung des Wirkvorganges, wenn die Klinke 68 durch die Nockenscheibe 71 ausgeschwenkt wird, so daß die Trommel 2 für die Verdrehung in Richtung des Pfeiles 22 freigegeben wird. Der Trommelvorschub erfolgt um 90° (Winkel δ in Fig.18) und das Spiel beginnt dann von Neuem.

Wie die Fig.18 bis 20 zeigen, spiegelt sich das verkürzte Verhältnis der Trommelbewegungszeit im Vergleich zur Wirkzeit in der Form der Nockenscheibe 71 wieder. Ihr erhöhter Nockenteil, welcher eine Ausschwenkung der Klinke 68 beim Trommelvorschub bewirkt, erstreckt sich nur über etwa ein Drittel des Umfanges der Nockenscheibe 71, wogegen zwei Drittel dieses Umfanges der für den Wirkvorgang zur Verfügung stehenden Zeit entsprechen.

Eine Variante hiezu ist in den Fig.21 und 22 dargestellt. Die Abtriebswelle 75 des Motors 7' trägt eine Scheibe 76, an der eine endlose Kurvenschleife 77 befestigt ist, in der ein Zapfen 78 geführt ist, der auf der Stange 61 des Gestänges 60 sitzt, mit welchem die Antriebe 5,47 für die Trommel 2 bzw. die Zwangsführung 46 mit dem Schwingarm 62 verbunden sind. Die Stange 61 hat einen Schlitz 79, in den ein am Gestell 1 befestigter Zapfen 80 eingreift, welcher die Stange 61 schwenkbar und verschiebbar hält. Durch die exzentrische Anordnung der Kurvenschleife 77 in Bezug auf die Abtriebswelle 75 werden sinngemäß dieselben Effekte erzielt wie dies anhand der Fig.18 bis 20 beschrieben wurde.

Fig.21 zeigt auch den Antrieb für die Vorportioniereinrichtung 10 und für die Bemehlungsvorrichtung 16. Auf der Abtriebswelle 75 sitzt ein Kettenrad, das über eine Kette ein auf der Welle 81 der einen Sternwalze 11 sitzendes Kettenrad 82 antreibt. Dieses Kettenrad 82 ist mittels einer Magnetkupplung mit der Welle 81 gekuppelt, welche Kupplung vom Fühler 15 (Fig.1) bzw. über die im Schaltkasten 53 angeordnete Elektronik wie beschrieben gesteuert wird. Die beiden Sternwalzen 11 sind mittels Zahnrädern miteinander gekuppelt, so daß sie synchron mit einander entgegengesetzten Drehrichtungen umlaufen.

Für die Bemehlungsvorrichtung 16 ist der Antrieb von einem auf die Welle der Trommel 2 aufgesetzten Kettenrad 83 abgeleitet, das über eine Kette 84 sowohl die Bemehlungsvorrichtung 16 antreibt, und zwar deren untere Verteilerbürste 20, als auch die Reinigungswalze 48. Die beiden Bürstenwalzen 18,20 der Bemehlungsvorrichtung 16 sind miteinander über einen Kettentrieb gekuppelt, wobei das der Dosierwalze 18 zugeordnete Kettenrad über eine Magnetkupplung mit der dieser Dosierbürste 20 zugeordneten Welle verbunden ist. Auch diese Magnetkupplung kann vom Fühler 15, gegebenenfalls mit einer einstellbaren Verzögerungszeit, bzw. über die im Schaltkasten 53 befindliche Elektronik gesteuert werden.

Die Umschalteinrichtung 50 zur Umschaltung von den kleineren Aufnahmeöffnungen 4 auf die größeren Aufnahmeöffnungen 3 bzw. umgekehrt, hat einen im Gestell 1 entgegen der Wirkung einer Feder 85 verschiebbar geführten Stößel 86, der an seinem inneren Ende eine Rolle 87 trägt, die mit der am Schwingarm 62 schwenkbar gelagerten Klinke 63 zusammenwirkt. Soll umgeschaltet werden, so wird der Stößel in die in Fig.22 dargestellte Lage entgegen der Wirkung der Feder 85 eingedrückt, so daß bei der Vorschubbewegung der Trommel (Pfeil 67) die Rolle 87 zur Anlage an die Klinke 63 gelangt und dadurch diese Klinke entgegen der Wirkung der Feder 84 aushebt. Dadurch wird die Mitnahme der Trommel 2 bei der Verschwenkung des Schwingarmes 62 in Richtung des Pfeiles 87 so lange unterbrochen, bis eine Nase 88 an der Rolle 87 zur Anlage kommt und dadurch den Stößel 86 aus einer Kugelrast 89 drückt, so daß der Stößel in die Ausgangslage (Fig.21) unter der Wirkung der Feder 85 zurückgeführt wird. Die Klinke 63 rastet dann unter der Wirkung der Feder 64 in die nächstfolgende Rast der Rastenreihe 65 ein.

Wird der Stößel 86 betätigt, während die Zwangsführung 46 relativ zur Trommel 2 verschwenkt wird, die Verschwenkung des Schwingarmes 62 also entgegen der Richtung des Pfeiles 67 erfolgt, dann drückt die Nase 88 der Klinke 63 die Rolle 87 entlang einer Führung 90 zurück, so daß die Rolle 87 ausweichen kann. Sobald der Trommelvorschub einsetzt, gleitet die Rolle 87 wieder in der Führung 90 nach unten in die in Fig.21 dargestellte Lage und kommt daher wie vorhin beschrieben zur Wirkung.

Um die Zwangsführung 46 an einer Bearbeitungsstelle für die Teigstücke 38, z.B. an der Portionierstelle 14 zwecks Veränderung des Auswiegegewichtes der Teigstücke, ändern zu können, ohne daß sich diese Änderung auf die Verhältnisse bei der Wirkstelle 24 oder bei der Ablagestelle 39 auswirkt, besteht jede Zwangsführung 46 aus zumindest zwei relativ zueinander verstellbaren Bauteilen. Die in der Zeichnung dargestellten Ausführungsbeispiele zeigen der Einfachheit halber nur zwei solche Bauteile 91,92 (Fig.2 bis 8 und 16,17), jedoch können auch drei oder mehr solche Bauteile vorgesehen sein. Gemäß der Ausführungsform nach den Fig.2 bis 8 sind die beiden Bauteile 91,92 um ein gemeinsames Zentrum 93 herum schwenkbar, welches Zentrum mit der Achse 94 (Fig.2) der Trommel 2 zusammenfällt. Jeder der beiden Bauteile 91,92 trägt einen Abschnitt 95 bzw.96 der Kurvenbahn 45, welche beiden Abschnitte sich wirkungsmäßig in jeder relativen Schwenklage der beiden Bauteile 91,92 so ergänzen, daß alle Kolben 43 stets sicher in radialer Richtung geführt sind und daher weder nach außen noch nach innen ausweichen können. Die beiden Bauteile 91,92 überlappen sich hiebei in der Regel teilweise (Fig.2), der Grad der Überlappung ist durch die relative Verschwenkung der beiden Bauteile bestimmt. Die erwähnte Variationsmöglichkeit ergibt sich dadurch, daß am Bauteil 91 (Fig.3,4) der Abschnitt 95 der Kurvenbahn 45 eine Verbreiterung 97 hat, welcher Abschnitt, wäre er allein für die Führung der Kolben 43 maßgebend, ein Pendeln der Kolben erlauben würde. Dieses Pendeln wird aber dadurch verhindert, daß sich dieser Verbreiterung 97 der Abschnitt 96 der Kurvenbahn 45 des Bauteiles 92 (Fig.5,6) überlagert, so daß dieser Abschnitt bestimmend für die Zwangsführung der Kolben 43 wird. In analoger Weise wirkt der Abschnitt 96 des Bauteiles 92 führend auf die Kolben 43 in jenem Sektor 98 des Bauteiles 91, in welchem die Kurvenbahn 45 unterbrochen ist. In zumindest einem Abschnitt der Kurvenbahn 45 wird diese auch von beiden Bauteilen 91,92 begrenzt, und zwar in einem Sektor 99, welcher jenen Teil des Sektors 98 darstellt, der dem nicht verbreiterten, in den Sektor 98 mündenden Ende der Kurvenbahn 45 im Bauteil 91 entspricht. Dort wird die Kurvenbahn 45 außen von einem Umfangssteg 100 des Bauteiles 91 begrenzt, der außenseitig des Sektors 98 liegt. Innen erfolgt die Begrenzung durch einen plattenförmigen, mit spiralförmigem Umfang verlaufenden Abschnitt 101 des Bauteiles 92. Die Relativverdrehung der beiden Bauteile 91,92 ist begrenzt durch Anschläge 102,102' des Bauteiles 91 bzw. 103,103' des Bauteiles 92. In der Stellung der beiden Bauteile 91,92, in welcher die Anschläge 102,103 aneinander zur Anlage kommen, liegt auch das Stirnende 104 des Abschnittes 101 (Fig.5) an einer Seitenfläche 105 einer Verdickung 106 des Bauteiles 91 an. Der Winkel, um welchen die beiden Bauteile 91,92 relativ zueinander verschwenkbar sind, beträgt annähernd 50°, kann jedoch bei Bedarf problemlos auch größer gemacht werden, wenn dies aufgrund der vorliegenden Erfordernisse gewünscht ist.

Zur Verdrehung der beiden, die Zwangsführung 46 für die Kolben 43 bildenden Bauteile 91,92, auch relativ zueinander, sind die beiden Bauteile 91,92 an konzentrischen Wellen 107,108 (Fig.2) befestigt, von denen die Welle 107 eine die Welle 108 führende Hohlwelle ist. In der Zwangsführung 46 der beiden Bauteile 91,92 ist das die Kolben 43 bewegende Gestänge 44 (Fig.1,2) geführt, und zwar läuft in der Kurvenbahn 45 eine Rolle 109, die am einen Ende eines Schwenkhebels 110 (Fig.2) drehbar gelagert ist, dessen anderes Ende starr auf einer Welle 111 sitzt, die in den beiden Seitenschildern 112 der Trommel 2 drehbar gelagert ist. Die Welle 111 trägt für jeden Kolben 43 einen Schwenkarm 113, dessen freies Ende mittels einer Lasche 114 gelenkig mit dem inneren Ende des Kolbens 43 verbunden ist.

Die beiden Wellen 107,108 sind konzentrisch in der Trommelwelle 66 (Fig.2) nach außen geführt und dort mit dem Antrieb 47 wirkungsmäßig verbunden. Hiezu kann der Antrieb 47 so ausgebildet sein, wie dies die Fig.18 bis 20 zeigen, es kann jedoch auch die Ausbildung gemäß den Fig.9 bis 14 gewählt werden. Diese Anordnung hat jedoch nicht den Vorteil, daß die Zeiten für den Trommelvorschub und für den Wirkprozeß unterschiedlich lang gewählt werden können. Wie bei der Ausführungsform nach den Fig.18 bis 20 erfolgt der Trommelvorschub von der Abtriebswelle 75 des Motors 7' mittels einer Kurbel 54 und einer daran angelenkten Stange 61 auf den Schwingarm 62, der beim Trommelvorschub die Trommel mittels der federbelasteten Klinke 63 mitnimmt. Durch die Nockenscheibe 71 wird hiebei die federbelastete Klinke 68 aus der Rastenreihe 65 ausgeschwenkt gehalten, so daß sich die Trommel 2 drehen kann. Sobald der Trommelvorschub beendet ist, gleitet die Rolle 70 der Klinke 68 von der Nockenscheibe 71 ab, die Klinke 68 rastet in die Rastenreihe 65 ein und die Trommel 2 wird blockiert. Während des Stillstandes der Trommel 2 werden die beiden, die Zwangsführung 46 bildenden Bauteile 91,92 gemeinsam verdreht, wodurch die Kolben 43 an den einzelnen Stationen vor- bzw. zurückgeschoben werden. Die Verdrehung der beiden Bauteile 91,92 kann, wie dies in den Fig.18 bis 20 dargestellt ist, vom Schwingarm 62 aus erfolgen, gemäß der Ausführungsvariante nach den Fig.2 bis 14 dient jedoch hiezu eine weitere, außen angebrachte Kurvenscheibe 114 des Antriebes 47, welche über einen Kettentrieb 115 von der Abtriebswelle 75 des Motors 7' kontinuierlich angetrieben wird. Diese Kurvenscheibe 114 kann auf der gleichen Welle angeordnet sein wie die Nockenscheibe 71 und wirkt mit ihrem Umfang auf eine Rolle 116, die an einem Hebel 117 gelagert ist, der fest mit der Hohlwelle 107 des Zwangsführungsbauteiles 91 verbunden ist (Fig.2). Ein Reibbelag 118 nimmt dabei eine außenseitig angeordnete, mit der Welle 108 des Zwangsführungsbauteiles 92 verbundene Scheibe 119 mit. Diese Rückdrehung der Bauteile 91,92 wird gebremst durch einen Bremsbelag 119, welcher am während dieser Rückdrehung feststehenden, die Rolle eines Klinkenrades spielenden, die Rastenreihe 65 tragenden Bauteil angeordnet ist. Das Ende der Verschwenkung des Hebels 117 ist in Fig.14 dargestellt. In diesem Augenblick gleitet die Kurvenscheibe 114 von der Rolle 116 ab und es beginnt die Zurückführung des Hebels 117 in die in Fig.10 dargestellte Ausgangsstellung unter Einwirkung der Vorschubbewegung der Trommel 2, da über den Bremsbelag 119 und den Reibbelag 118 bei der zwecks Vorschub der Trommel 2 erfolgenden Verdrehung der Rastenreihe 65 auch die Bauteile 91,92 und somit der Hebel 117 mitgenommen werden.

Durch die Form der Kontur der Kurvenscheibe 114 läßt sich die Winkelgeschwindigkeit, mit welcher die Zwangsführung 46 für die Kolben 43 verdreht wird, nach Wunsch beeinflussen, so daß stets optimale Wirkverhältnisse gegeben sind.

Eine zusätzliche Mitnahme der Scheibe 120 durch den Hebel 117 während der Auswiege-, Wirk- und Ausstoßphase kann erfolgen durch ein mit einem Zahnkranz 121 der Scheibe 120 kämmendes Zahnrad 122, das auf einer Verlängerung 123 des Hebels 117 drehbar gelagert ist und ein Handrad 124 zur Verstellung trägt. Dieses Zahnrad 122 kämmt mit einem weiteren, an der Verlängerung 123 gelagerten Zahnrad 125, welches ein Potentiometer 126 verstellt, an welchem das mittels des Handrades 124 eingestellte Auswiegegewicht mittels eines Displays angezeigt wird (siehe auch Fig.7,8).

In den Fig.7 und 8 ist dargestellt, wie durch Verdrehung des einen, die Zwangsführung 46 bildenden Bauteiles 92 die Verhältnisse an der Portionierstelle 14 hinsichtlich des Volumens der dort zu portionierenden Teigstücke zwischen einem Maximum (Fig.7) und einem Minimum (Fig.8) geändert werden können, ohne daß diese Änderung Einfluß hat auf die Verhältnisse an der Wirkstelle 24 und an der Ablagestelle 39. Die stufenlose Veränderungsmöglichkeit des portionierten Teigvolumens wird erreicht durch die spiralförmige Gestalt eines Abschnittes 45' der Kurvenbahn 45 im Bauteil 92, welcher Abschnitt 45' sich vom Außenumfang des Bauteiles 92 bis zu einer mittigen Nabe 127 desselben erstreckt.

Die Fig.15 bis 17 zeigen eine Ausführungsvariante für die Ausbildung relativ zueinander beweglicher, die Zwangsführung 46 bildender Bauteile 91,92. Die hier aus Deutlichkeitsgründen übertrieben stark dargestellte Kurvenbahn 45 verläuft in zwei Bauteilen 91,92, die beide im wesentlichen die Form eines Kreisabschnittes haben und im Bereiche des Umfanges durch ein Gelenk 128 miteinander verbunden sind. Die Verstellung erfolgt hier nicht durch Verdrehung der beiden Bauteile 91,92 relativ zueinander, wie dies bei der Ausführungsform nach den Fig.7 und 8 der Fall war, sondern durch Relativverschwenkung der beiden Bauteile 91,92, wofür der eine Bauteil 92 mit einer kreisbogenförmig verlaufenden Verzahnung 129 versehen ist, wobei das Zentrum dieses Kreisbogens in der Achse des Gelenkes 128 liegt. Diese Verzahnung 129 kämmt mit einem Zahnrad 130, das am anderen Bauteil 91 gelagert ist und von außen verdrehbar ist, z.B. mittels des Handrades 124 (Fig.2,16). In diesem Fall ergibt sich, wie Fig.16 zeigt, für die Lagerung der beiden Kurvenscheibenbauteile 91,92 eine gegenüber Fig.2 etwas abgewandelte Konstruktion, da ja bei einer Verdrehung des Bauteiles 91 der Bauteil 92 über das Gelenk 128 mitgenommen wird.

Selbstverständlich ist die dargestellte Konstruktion auch für solche Maschinen anwendbar, bei denen alle Aufnahmeöffnungen am Mantel der Trommel 2 gleichgroß sind. In diesem Fall ist zweckmäßig die Anordnung so getroffen, daß vier Reihen von Aufnahmeöffnungen vorgesehen sind, die an der Trommel um jeweils 90° gegeneinander versetzt angeordnet sind.

Zur Erleichterung der Reinigung ist es zweckmäßig, wenn die beweglichen teigführenden Bauteile im Einfüllschacht 9 sowie vorzugsweise auch die Reinigungsbürste 48 nach der gleichen Richtung aus dem Gestell 1 ausbaubar sind. Hiezu sind nicht dargestellte abnehmbare oder wegschwenkbare Gehäusewände in den Abschnitten dieser Bauteile (Sternwalzen 11, Bürsten 18,20 der Bemehlungsvorrichtung 16 und Schieber 6, sowie gegebenenfalls Reinigungsbürste 48) vorgesehen, nach deren Entfernung die Walzen bzw. Bürsten bzw. der Schieber 6 aus dem Gehäuse herausziehbar sind. Hiezu ist es zweckmäßig, die Sternwalzen 11 sowie die Bürsten 18,20,48 mit ihren Antriebswellen über lösbare Schnellverbindungen, insbesondere Steckverbindungen, zu verbinden, die eine rasche Demontage bzw. Wiedermontage zulassen. Für den Schieber 6 dient die folgende Bauweise: Der Schieber 6 hat im Bereiche seines hinteren Endes eine nach unten offene Ausnehmung 131 (Fig.1,2), welche Ausnehmung auch nach jener Seite offen ist, die nach der entgegengesetzten Richtung zeigt als die Ausbaurichtung des Schiebers 6. In diese Ausnehmung 131 greift der obere Teil 132 eines zwei durch ein Gelenk 135 miteinander verbundene Teile 132,133 aufweisenden Schwenkhebels 134 ein, der einen Bauteil des Kurbelantriebes 7 bildet und um eine horizontale Achse 136 im Gestell 1 schwenkbar gelagert ist. Am Teil 133 ist das Gehäuse der Feder 8 befestigt, deren eines Ende an diesem Gehäuse festgelegt ist, das andere Ende am Hebelteil 132. Dieser Hebelteil 132 greift mit seinem oberen Ende in die Ausnehmung 131 von unten durch einen Schlitz 137 der Bodenwand 138 der Kammer 13 ein und trägt eine Rolle 139, die an der Wand der Ausnehmung 131 anliegt. Dies ermöglicht es, nach Abnahme des entsprechenden Wandteiles des Gehäuses 1, welcher zugleich die seitliche Führung des Schiebers 6 bilden kann, diesen Schieber 6 normal zur Zeichenebene (Fig.1) aus dem Gehäuse 1 herauszuziehen bzw. in der Gegenrichtung wieder zu montieren.

Die Erfindung ist auch anwendbar auf solche Maschinen, bei denen nur gewirkt, nicht hingegen portioniert wird, da bereits portionierte Teigstücke in die Aufnahmeöffnungen eingelegt werden, z.B. mittels eines Zufuhrbandes. In diesem Fall bietet die Erfindung die Vorteile, daß die Wirkverhältnisse nach Wunsch geändert werden können, ohne daß dies Rückwirkung hat auf die Verhältnisse an der Ablagestelle 39. An letzterer Stelle ist es aus Sicherheitsgründen wichtig, daß die Kolben 43 stets bündig mit dem Umfang der Trommel 2 abschließen, so daß in die Aufnahmeöffnungen 3 bzw.4 nicht mehr hineingegriffen werden kann. Dieser Vorteil kann natürlich auch bei den anderen, vorstehend beschriebenen Maschinentypen gewahrt werden.

Das Erfindungsprinzip läßt sich problemlos auf mehr als zwei die Zwangsführung 46 bildende Bauteile erweitern, so daß auch komplizierten Bewegungsverhältnissen der Kolben 43 an den einzelnen Bearbeitungsstationen 14,24,39 Rechnung getragen werden kann. Selbstverständlich kann auch am unteren Umfangsteil der Trommel 2 eine weitere Bearbeitungsstation vorgesehen sein, z.B. eine Station, an der die leeren Aufnahmeöffnungen 3,4 gereinigt und bzw. oder beölt und bzw. oder bemehlt werden.

Auch andere Maschinentypen sind denkbar, bei denen eine andersgeartete Behandlung des Teiges als Wirken bzw. Portionieren stattfindet, soferne es bei dieser Maschinentype auf eine Bewegung des Kolbens in seiner Aufnahmeöffnung ankommt.

## Patentansprüche

1. Maschine zum Behandeln, insbesondere Portionieren und bzw. oder Wirken, von Teig, mit einer um eine horizontale Achse (2') durch einen Antrieb (5) schrittweise drehbaren Trommel (2), die an ihrem Umfang mit Aufnahmeöffnungen (3,4) für Teigportionen versehen ist, die an einer Stelle des Trommelumfanges in die Aufnahmeöffnungen (3,4) eingebracht, an zumindest einer Stelle des Trommelumfanges behandelt, insbesondere portioniert und bzw. oder gewirkt, und an einer relativ zu dieser Stelle versetzten Stelle des Trommelumfanges aus den Aufnahmeöffnungen (3,4) ausgestoßen werden, mit zumindest einem Behandlungsorgan für den Teig, mit einem Kolben (43) in jeder Aufnahmeöffnung (3,4), der in radialer Richtung der Trommel (2) in der Aufnahmeöffnung (3,4) geführt ist, und mit einer gekrümmten Zwangsführung (46) für die Kolben (43) zur radialen Ein- und Auswärtsbewegung derselben während zumindest einer Phase der Behandlung, welche Zwangsführung (46) die Kolben (43) nach innen und außen, bezogen auf den Radius der Trommel (2) führt und für die Radialbewegung der Kolben (43) relativ zur Trommel (2) zumindest in den Stillstandsphasen der Trommelbewegung durch einen Antrieb (47) automatisch um die Achse der Trommel (2) verdrehbar ist, und wobei eine Verstelleinrichtung (124) zur Veränderung der Ausgangslage dieser Relativverdrehung vorgesehen ist, dadurch gekennzeichnet, daß die Zwangsführung (46) zumindest zwei, gesonderte Kurvenbahnabschnitte (95,96) aufweist, die an zumindest zwei unabhängig von der Relativverdrehung relativ zueinander verstellbaren Bauteilen (91,92) angeordnet sind und einander zu der gemeinsamen Zwangsführung (46) wirkungsmäßig ergänzen, und daß alle Kurvenbahnabschnitte (95,96) gemeinsam durch den Antrieb (47) relativ zur Trommel (2) verdrehbar sind, wobei den die Kurvenbahnabschnitte (95,96) tragenden Bauteilen (91,92) konzentrisch ineinander gelagerte Wellen (107,108) bzw. Hohlwellen zugeordnet sind, die durch Verstelltriebe relativ zueinander und bzw. oder relativ zur Trommel (2) verdrehbar sind.

2. Maschine nach Anspruch 1, dadurch gekennzeichnet, daß zumindest zwei die Kurvenbahnabschnitte (95,96) tragende Bauteile (91,92) um ein gemeinsames Zentrum (93) relativ zueinander einstellbar verdrehbar sind.

3. Maschine nach Anspruch 1, dadurch gekennzeichnet, daß zumindest zwei die Kurvenbahnabschnitte (95,96) tragende Bauteile einseitig voneinander einstellbar spreizbar sind.

4. Maschine nach Anspruch 3, dadurch gekennzeichnet, daß die beiden Bauteile (91,92) am Umfang gelenkig miteinander verbunden und durch eine mittige Verzahnung (129,130) spreizbar sind.

5. Maschine nach einem der Ansprüche 1 bis 4, dadurch gekennzeichnet, daß die Verstelltriebe eine vom Antrieb (5,47) verdrehte Nocke oder Kurvenscheibe (114) aufweisen, an deren Umfang ein Schwenkhebel (117) anliegt, der mit zumindest einer Welle (107,108) der Bauteile (91,92) verbunden ist.

6. Maschine nach einem der Ansprüche 1 bis 5, dadurch gekennzeichnet, daß der Antrieb (5,47) eine weitere Kurvenbahn (56) aufweist, von der sowohl die schrittweise Vorschubbewegung der Trommel (2) als auch eine Verstellung zumindest eines Kurvenabschnittes (95,96) der Zwangsführung (46) abgeleitet sind, wobei die Zeitdauer jedes Bewegungsschrittes der Trommel (2) kürzer ist als die dazwischenliegenden Pausen.

7. Maschine nach Anspruch 6, dadurch gekennzeichnet, daß auf der Abtriebswelle (75) eines Motors (7') ein Bauteil, z.B. eine Kurbel (54) oder eine Scheibe (76), sitzt, welcher die weitere Kurvenbahn (57) bewegt, wobei diese Kurvenbahn (57) oder ein sie tragender Bauteil, z.B. ein Schwenkhebel (58), mittels eines Gestänges (60) mit einem die Trommel (2) bewegenden, auf der Trommelachse sitzenden Schwingarm (62) verbunden ist.

8. Maschine nach einem der Ansprüche 1 bis 7, dadurch gekennzeichnet, daß zumindest einer der Kurvenbahnabschnitte (95,96) eine Verbreiterung (97) aufweist, die vom Kurvenbahnabschnitt eines anderen Bauteiles (91,92) überlappt wird.

9. Maschine nach einem der Ansprüche 1 bis 8, dadurch gekennzeichnet, daß zumindest einer der Kurvenbahnabschnitte (96) spiralförmig an dem ihn tragenden Bauteil (92) von außen nach innen verläuft.

10. Maschine nach einem der Ansprüche 1 bis 9, dadurch gekennzeichnet, daß das Behandlungsorgan ein eine Kreisbewegung relativ zur zugeordneten Aufnahmeöffnung (3,4) vollführendes Wirkwerkzeug (29) oder ein den Teig in die Aufnahmeöffnung (3,4) eindrückendes Eindrückwerkzeug, insbesondere ein Schieber (6), ist.

## Claims

1. Machine for treating, particularly for portioning and/or kneading, of dough, comprising a drum (2) intermittently rotatable about a horizontal axis by drive means (5), said drum being provided at its periphery with openings (3, 4) which receive portions of dough which are introduced at one location on the circumference of the drum into said receiving openings (3, 4), are treated at at least one location on the circumference of the drum, particularly are portioned and/or kneaded, and are discharged from the receiving openings (3, 4) at a location on the circumference of the drum which is shifted with respect to said former location, the machine including at least one treating member for the dough, a respective plunger (43) in each of said receiving openings (3, 4) being guided in radial direction of the drum within the receiving opening (3, 4), and a curvilinear positive guidance (46) for the plungers (43) for inward and outward movement thereof during at least one phase of treatment, the positive guidance (46) guiding the plungers (43) inwardly and outwardly with respect to the radius of the drum (2) and being automatically rotatable about the axis of the drum (2) at least during the stopping periods of the drum motion by drive means (47) for moving the plungers (43) in radial direction in relation to the drum (2), adjustment means (124) being provided for changing the initial position of this relative rotation, characterized in that the positive guidance (46) comprises at least two separate curvilinear path portions (95, 96) which are located on at least two structural members (91, 92) which are movable relatively to each other independently of said relative rotation and which complement one another in their effect for common positive guidance (46), and that all curvilinear path portions (95, 96) are commonly rotatable in relation to the drum (2) by the drive means (47), shafts (107, 108) or hollow shafts concentrically supported in each other being assigned to the structural members (91, 92) which support the curvilinear path portions (95, 96) and being rotatable in relation to each other and/or to the drum (2) by adjusting drive means.

2. Machine according to claim 1, characterized in that at least two structural members (91, 92) supporting the curvilinear path portions (95, 96) are adjustably rotatable in relation to each other around a common centre (93).

3. Machine according to claim 1, characterized in that at least two structural members supporting the curvilinear path portions (95, 96) are able to be unidirectionally spread from each other in an adjustable manner.

4. Machine according to claim 3, characterized in that the two structural members (91, 92) are flexibly linked on the circumference and are able to be spread by a centre gear (129, 130).

5. Machine according to any of claims 1 to 4, characterized in that the adjusting drive means comprise a cam plate or cam disk (114) rotated by said drive means (5, 47), the periphery of which being engaged by a pivoting lever (117) which is connected to at least one shaft (107, 108) of the structural members (91, 92).

6. Machine according to any of claims 1 to 5, characterized in that the drive means (5, 47) comprises a further curvilinear path (56) from which both the intermittent advancing movement of the drum (2) and an adjustment of at least one curvilinear portions (95, 96) of the positive guidance (46) are derived, the period of each stepwise motion of the drum (2) being shorter than the intervening stops.

7. Machine according to claim 6, characterized in that a structural member, e.g. a crank (54) or a disk (76), is fitted onto the drive shaft (75) of a motor (7') and moves said further curvilinear path (57), said curvilinear path (57) or a structural member supporting it, e.g. a pivoting lever (58), being connected to a swing arm (62) which moves the drum (2) and is situated on the axis of the drum.

8. Machine according to any of claims 1 to 7, characterized in that at least one of the curvilinear path portions (95, 96) comprises an enlargement (97) which is overlapped by a curvilinear path portion of another structural member (91, 92).

9. Machine according to any of claims 1 to 8, characterized in that at least one of the curvilinear path portions (96) extends spirally from outwards inwardly on the structural member (92) which supports it.

10. Machine according to any of claims 1 to 9, characterized in that the treating member is either a kneading tool (29) carrying out a circular motion in relation to its assigned receiving opening (3, 4) or a pushing tool, especially a slider (6), pushing the dough into the receiving opening (3, 4),+

## Revendications

1. Machine de traitement de pâte, en particulier pour la portionner et/ou pour la pétrir, comprenant un tambour (2) tournant de manière intermittent autour d'un axe horizontal (2') à l'aide d'un dispositif d'entraînement (5), ledit tambour étant pourvu à sa périphérie d'ouvertures (3, 4) pour recevoir des portions de pâte, qui sont introduites dans ces ouvertures de réception (3, 4) à une place de la circonférence du tambour, qui sont traitées, en particulier portionnées et/ou pétries, et qui à d'au moins une place de la circonférence du tambour et à une place déplacée de cette dernière sont expulsées des ouvertures de réception (3, 4), la machine présentant au moins un organe de traitement pour la pâte, un piston (43) dans chaque ouverture de réception (3, 4), qui est guidé en direction radiale du tambour (2) dans l'ouverture de réception (3, 4), et un guidage contraint (46) curviligne pour les pistons (43) pour le mouvement radial en dedans et en dehors de ceux-ci pendant au moins une phase du traitement, ledit guidage contraint (46) guidant les pistons (43) en dedans et en dehors par rapport au rayon du tambour (2) et étant rotatif automatiquement autour de l'axe du tambour par un dispositif d'entraînement (47) par rapport au tambour pour le mouvement radial des pistons au moins dans les phases d'arrêt du mouvement du tambour, un dispositif d'ajustement (124) étant prévu pour changer la position initiale de cette rotation relative, charactérisée en ce que le guidage contraint (46) comprend au moins deux sections de chemin incurvé (95, 96) séparées, qui sont arrangées à d'au moins deux éléments de construction (91, 92) déplaçables relativement l'un à l'autre d'une manière indépendante de la rotation relative et dont l'effet se complète pour le guidage constraint commun, et en ce que toutes les sections de chemin incurvé (95, 96) sont rotatives ensemble relativement au tambour (2) par le dispositif d'entraînement (47), des arbres (107, 108) logés concentriquement l'un dans l'autre ou des arbres creux étant adjoints aux éléments de construction (91, 92) portant les sections de chemin incurvé (95, 96) et qui sont rotatifs relativement l'un à l'autre et/ou relativement au tambour (2) par des organes d'ajustage.

2. Machine selon la revendication 1, charactérisée en ce qu'au moins deux éléments de construction (91, 92) portant les sections de chemin incurvé (95, 96) sont rotatifs d'une manière ajustable relativement l'un à l'autre autour d'un centre (93) commun.

3. Machine selon la revendication 1, charactérisée en ce qu'au moins deux éléments de construction portant les sections de chemin incurvé (95, 96) sont formés pour être écartés unilatéralement l'un de l'autre d'une manière ajustable.

4. Machine selon la revendication 3, charactérisée en ce que les deux éléments de construction (91, 92) sont articulés l'un avec l'autre à leur périphérie et sont écartés par un engrenage central (129, 130).

5. Machine selon l'une des revendications 1 à 4, charactérisée en ce que les organes d'ajustage comprennent une came ou disque à came (114) tournée par le dispositif d'entraînement (5, 47), un levier pivotant (117) s'appliquant à la périphérie de celle-ci, qui est connecté avec au moins un arbre (107, 108) des éléments de construction (91, 92).

6. Machine selon l'une des revendications 1 à 5, charactérisée en ce que le dispositif d'entraînement (5, 47) comprend un chemin incurvé (56) additionnel, dont non seulement l'avancement intermittent du tambour (2) mais aussi un déplacement d' au moins d'une section de chemin incurvé (95, 96) du guidage contraint (46) sont dérivés, la période de chaque pas de mouvement du tambour (2) étant plus courte que les pauses intermédiaires.

7. Machine selon la revendication 6, charactérisée en ce qu'un élément de construction, par exemple une manivelle (54) ou une disque (76), est calée sur l'arbre d'entraînement (75) d'un moteur (7') et met en mouvement le chemin incurvé (57) additionnel, ce chemin incurvé (57) ou un élément de construction, qui le porte, par exemple un levier pivotant (58), étant connecté à l'aide de tiges (60) avec un levier oscillant (62), qui est disposé à l'axe du tambour et qui met en mouvement le tambour (2).

8. Machine selon l'une des revendications 1 à 7, charactérisée en ce qu'au moins une des sections de chemin incurvé (95, 96) comprend un élargissement (97), qui est recouvert de la section de chemin incurvé d'un autre élément de construction (91, 92).

9. Machine selon l'une des revendications 1 à 7, charactérisée en ce qu'au moins une des sections de chemin incurvé (96) s'étend en spirale du dehors en dedans à l'élément de construction (92) qui la porte.

10. Machine selon l'une des revendications 1 à 7, charactérisée en ce que l'organe de traitement est un outil à pétrir exécutant un mouvement ciculaire relativement à l'ouverture de réception (3, 4) adjointe ou un outil à fourrer, en particulier un coulisseau (6), fourrant la pâte dans l'ouverture de réception (3, 4).
